# EUROPÄISCHE PATENTSCHRIFT

(11) **EP 2 061 637 B1**
(45) Veröffentlichungstag und Bekanntmachung des Hinweises auf die Patenterteilung: **06.03.2013**
(21) Anmeldenummer: 07803433.7
(22) Anmeldetag: 12.09.2007
(51) Int. Cl.: B29C 45/00, F02D 9/10, F16K 27/02, B29C 45/33

(54) **VERFAHREN ZUR HERSTELLUNG VON KLAPPENMECHANISMEN FÜR ANSAUGTRAKTE VON VERBRENNUNGSMASCHINEN**
METHOD FOR THE PRODUCTION OF FLAP MECHANISMS FOR INTAKE LINES OF COMBUSTION ENGINES
PROCÉDÉ DE FABRICATION DE MÉCANISMES À VOLET POUR LA VOIE D'ASPIRATION DE MOTEURS À COMBUSTION INTERNE

(30) Priorität: 15.09.2006 DE 102006043342
(43) Veröffentlichungstag der Anmeldung: 27.05.2009
(73) Patentinhaber: MAHLE International GmbH, 70376 Stuttgart (DE)
(72) Erfinder: DEISS, Siegfried, 93099 Mötzing (DE); FISCHER, Peter, 93152 Nittendorf (DE); MEHNE, Georg, 93173 Wenzenbach (DE)
(74) Vertreter: BRP Renaud & Partner
(86) Internationale Anmeldenummer: PCT/EP2007/059582
(87) Internationale Veröffentlichungsnummer: WO 2008/031845

(56) Entgegenhaltungen:
- FR-A- 2 687 601
- US-A1- 2004 031 945
- US-A1- 2006 027 947

## Beschreibung

Die vorliegende Erfindung betrifft ein Verfahren zur Herstellung von Klappenmechanismen für Ansaugtrakte, insbesondere Luftverteilungsrohre, von Verbrennungsmaschinen, wobei die Klappenmechanismen im Wesentlichen aus einem Rahmen und einer innerhalb des Rahmens drehbar gelagerten Klappe bestehen. Die Erfindung betrifft außerdem ein Spritzwerkzeug zur Durchführung dieses Verfahrens sowie einen durch das Verfahren herstellbaren Klappenmechanismus.

Für Klappen- bzw. Abschaltmechanismen in Ansaugtrakten bzw. in Luftverteilern von Verbrennungsmaschinen werden in Zukunft durch schärfere Abgasgesetzgebung immer kleine Spaltmaße bzw. eine immer größere Dichtheit zwischen den Klappen und den Rohrkanälen gefordert. Daraus ergeben sich immer größere Probleme bei der Toleranzauslegung der Bauteile, insbesondere hinsichtlich der Wärmedehnung der Bauteile.

Zurzeit wird dieses Problem dadurch gelöst, dass die Kunststoffklappen auf einer Metallwelle oder einem Metallprofil aufgeschoben werden und so quasi schwimmend gelagert sind, um ein Verklemmen der Klappen in den Rohrkanälen durch Wärmeausdehnung zu verhindern.

Eine weitere Lösung besteht darin, dass Klappeneinheiten genutzt werden, welche aus einem Rahmen und einer Klappe bestehen. Um kleinste Spaltmaße zwischen Rahmen und Klappen zu verwirklichen werden beide Teile in einem Werkzeug gespritzt, wobei der Rahmen einen Teil der Form für die Klappe bildet. Um aber ein Verbinden der beiden Teile zu verhindern, müssen hier unterschiedliche Materialien benutzt werden. Diese Lösungen liegen vor allem im Bereich der Klappenlager über dem notwendigen Temperaturbereich zum Klemmen. US-A-2004/031945 offnebart ein verfahren zur Herstellung von Klappen mechanismen gemäβ dem oberbegriff des Anspruchs 1. FR-A-2687601 offenbart ein spritzguss werkzeug, wobei eine welle umspritzt um wird eine klappe herzustellen. US-A-2006/027947 offenbart einen Klappenmechanismus gemäβ dem oberbegriff des Anspruchs 5.

Aufgabe der vorliegenden Erfindung ist es, für ein Verfahren bzw. ein Spritzwerkzeug bzw. einen Klappenmechanismus der eingangs genannten Art eine verbesserte Ausführungsform anzugeben, die sich insbesondere dadurch auszeichnet, dass Klappenmechanismen preiswert hergestellt werden können, welche im Betrieb alle an sie gestellten Anforderungen bezüglich der Toleranz erfüllen.

Diese Aufgabe wird durch die Merkmale der Ansprüche gelöst.

Durch das erfindungsgemäße Verfahren wird das Problem der Fertigungstoleranzen und somit der Verwirklichung von sehr kleinen Spaltmaßen gelöst, da sowohl Rahmen als auch Klappe in einem Werkzeug gespritzt werden. Im Gegensatz zu den bekannten Lösungen werden beide Teile durch die Werkzeugform gebildet, d.h. sie haben keinen Kontakt miteinander. Die Bereiche der Klappenlager werden mit einem so großen Spiel ausgestattet, dass ein zusätzliches Lager zwischen Rahmen und Klappe eingebracht werden kann.

Weitere zweckmäßige Ausgestaltungen der Erfindung ergeben sich aus den Unteransprüchen sowie der nachfolgenden Beschreibung eines gemäß dem erfindungsgemäßen Verfahren hergestellten Klappenmechanismus und einem Spritzgusswerkzeug zur Durchführung des erfindungsgemäßen Verfahrens anhand der beigefügten Zeichnung.

Es zeigen:
- Figur 1: in perspektivischer Ansicht einen Rahmen und eine Klappe eines gemäß des erfindungsgemäßen Verfahrens hergestellten Klappenmechanismus,
- Figur 2: in perspektivischer Ansicht einen Rahmen, eine Klappe und noch nicht eingebautes Lager eines Klappenmechanismus entsprechend Figur 1,
- Figur 3: in perspektivischer Ansicht einen aus Rahmen, Klappe und Lagern bestehenden Klappenmechanismus in zusammengebauten Zustand entsprechend Figur 1,
- Figur 4: eine perspektivische Schnittdarstellung eines Spritzgusswerkzeuges zur Durchführung des erfindungsgemäßen Verfahrens im geschlossenen Zustand,
- Figur 5 und Figur 6: eine perspektivische Schnittdarstellung des in Figur 4 gezeigten Spritzgusswerkzeugs in teilweise geöffneten Zuständen, und
- Figur 7: in einer Explosionsdarstellung das in Figur 4 dargestellte Spritzgusswerkzeug im vollständig geöffneten Zustand.

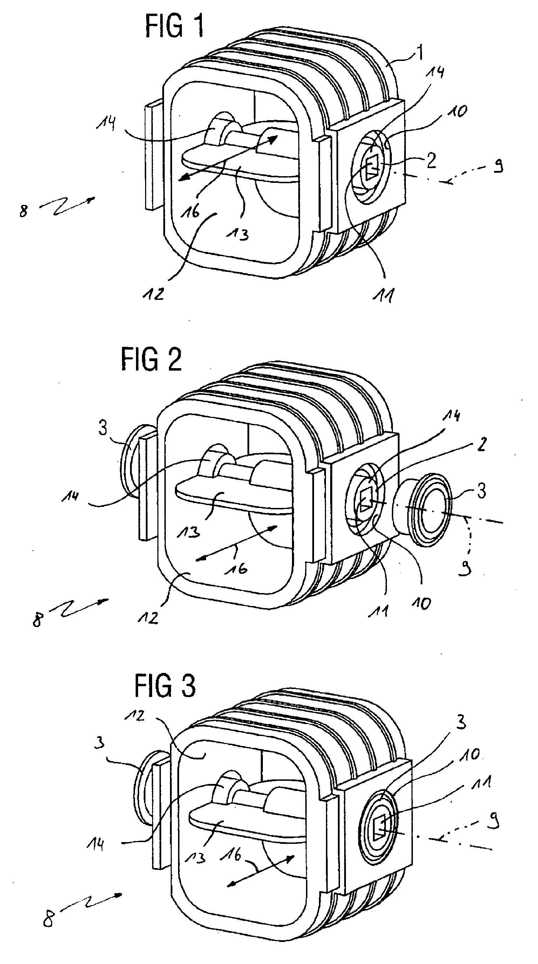

Figur 1 zeigt einen Klappenmechanismus 8, der sich für eine Verwendung in einem Ansaugtrakt, z.B. in einem Luftverteilungsrohr, einer Verbrennungsmaschine eignet, nach dem Spritzvorgang gemäß der vorliegenden Erfindung. In einem Rahmen 1 ist eine Klappe 2 unverlierbar gehalten. Um den Klappenmechanismus 8 in einen gebrauchsfähigen Zustand zu bringen, werden gemäß Fig. 2 zwischen Rahmen 1 und Klappe 2 Lager 3 eingeführt.

Für die unverlierbare Halterung der Klappe 2 im Rahmen 1 weist der Rahmen 1 koaxial zu einer Schwenkachse 9, um welche die Klappe 2 im gebrauchsfertigen Zustand verschwenkbar ist, zwei Öffnungen 10 auf. Die beiden Öffnungen 10 liegen sich bezüglich der Schwenkachse 9 axial gegenüber. Die Klappe 2 besitzt zentral eine Wellenaufnahme 11, in die eine hier nicht gezeigte Welle zum Antreiben der Klappe 2 einführbar ist, um den Klappenmechanismus 8 in seinen gebrauchsfähigen Zustand zu bringen. Die Welle ist dann koaxial zur Schwenkachse 9 angeordnet. Die Klappe 2 besitzt ferner einen in einem vom Rahmen 1 quer zu einer durch einen Doppelpfeil angedeuteten Durchströmungsrichtung 16 umschlossenen Innenraum 12 verstellbaren Klappenkörper 13, mit dem ein durchströmbarer Querschnitt des Innenraums 12 bzw. des Rahmens 1 steuerbar ist. Des Weiteren weist die Klappe 2 bezüglich der Schwenkachse 9 axial über den Klappenkörper 13 vorstehende Abschnitte 14 auf, die in die Öffnungen 10 axial hineinragen. Die Verliersicherung zwischen Klappe 2 und Rahmen 1 wird durch diese in die Öffnungen 10 des Rahmens 1 axial hineinragende Abschnitte 14 der Klappe 2 gebildet. Ohne Verformung des Rahmens 1 und/oder der Klappe 2 kann die Klappe 2 nicht vom Rahmen 1 getrennt werden.

Die genannten Öffnungen 10 dienen gemäß Fig. 2 zur Aufnahme der Lager 3.

Beim Spitzgussverfahren kann das Spaltmaß zwischen Rahmen 1 und Klappe 2 individuell angepasst werden. Weiterhin kann je nach Anforderung an Lebenszeit, Temperatur- und mechanischer Belastung die Lagerpaarung angepasst werden.

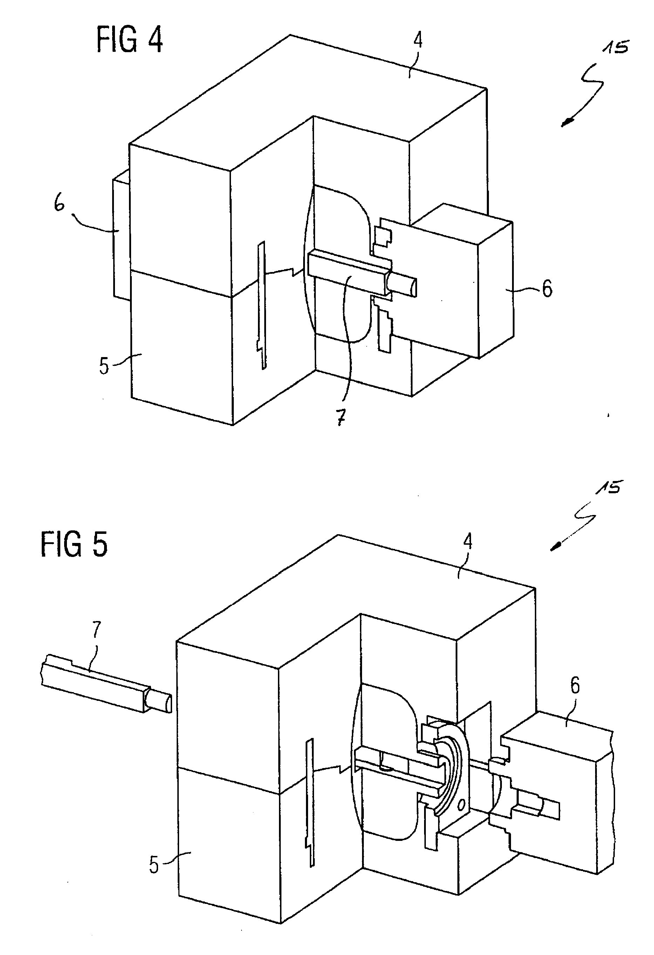

Die Figuren 4 bis 7 zeigen ein Spritzgusswerkzeug 15 zur Durchführung des erfindungsgemäßen Verfahrens in unterschiedlichen Zuständen. Das Spritzgusswerkzeug 15 besteht im Wesentlichen aus einem oberen Werkzeugteil 4 und einem unteren Werkzeugteil 5, sowie Trenneinsätzen 6 und einem Formeinsatz 7.

Aus den Zeichnungen ist zu erkennen, dass die Trenneinsätze 6 jeweils vorne und hinten den Hohlraum für den Rahmen 1 von dem Hohlraum für die Klappe 2 während des Spritzvorgangs trennen. Rahmen 1 und Klappe 2 werden bevorzugt aus Kunststoff gespritzt und/oder insbesondere aus dem gleichen Material hergestellt.

Im Zustand gemäß Fig. 4 sind die beiden Werkzeugteile 4, 5 zusammengefahren und die Trenneinsätze 6 sowie der Formeinsatz 7 sind eingefahren. In diesem Zustand bildet das Spritzgusswerkzeug 15 die genannten Hohlräume zum Spritzformen des Rahmens 1 und der Klappe 2. Dabei handelt es sich um eine gemeinsame Form für beide Bauteile. Bemerkenswert ist dabei, dass in dieser gemeinsamen Form die beiden separaten Bauteile, also Rahmen 1 und Klappe 2, voneinander getrennt sind und somit insbesondere über separate Spritzkanäle gespritzt werden. Die Herstellung von Rahmen 1 und Klappe 2 kann somit im wesentlichen gleichzeitig, jedoch in einem gemeinsamen Spritzwerkzeug 15 realisiert werden.

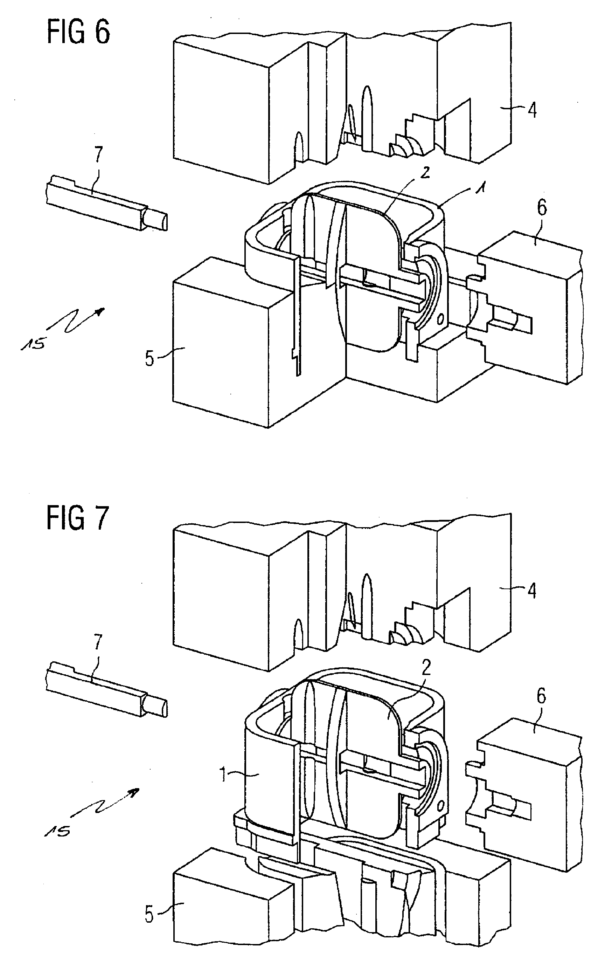

Nach dem Spritzen von Rahmen 1 und Klappe 2 wird das Spritzwerkzeug 15 geöffnet. Hierzu werden zunächst gemäß Fig. 5 der Formeinsatz 7 und die Trenneinsätze 6 herausgezogen, während die beiden Werkzeugteile 4 und 5 zunächst noch im zusammengefahrenen Zustand verbleiben. Anschließend wird gemäß Fig. 6 beispielsweise das obere Werkzeugteil 4 vom unteren Werkzeugteil 5 abgehoben, so dass gemäß Fig. 7 die gespritzten Teile also der Rahmen 1 und die darin unverlierbar angeordnete Klappe 2 aus dem unteren Werkzeugteil 5 herausgenommen werden können.

## Patentansprüche

1. Verfahren zur Herstellung von Klappenmechanismen für Ansaugtrakte, insbesondere Luftverteilungsrohre, von Verbrennungsmaschinen, wobei die Klappenmechanismen im Wesentlichen aus einem Rahmen und einer innerhalb des Rahmens (1) drehbar gelagerten Klappe (2) bestehen,
wobei
(sowohl der Rahmen (1) als auch die Klappe (2) in einem Spritzgusswerkzeug derart gespritzt werden, dass nach dem Spritzvorgang die Klappe (2) eine zentrale Wellenaufnahme (11) aufweist und unverlierbar im Rahmen (1) gehalten ist,
und dass in einem weiteren Arbeitsgang Lager (3) zwischen Rahmen (1) und Klappe (2) eingefügt werden, **dadurch gekennzeichnet, dass** nachfolgend eine Welle in die Wellenaufnahme eingefürt wird.
In die wellenaufname

2. Verfahren nach Anspruch 1,
**dadurch gekennzeichnet,**
**dass** der Rahmen (1) und die Klappe (2) aus demselben Material oder aus verschiedenen Materialien gespritzt werden, wobei es sich insbesondere um einen Kunststoff oder
um Kunststoffe handelt.

3. Spritzgusswerkzeug zur Durchführung des Verfahrens nach Anspruch 1 oder 2,
**dadurch gekennzeichnet,**
**dass** zwei übereinander liegende Werkzeugsteile (4, 5) Hohlräume für den Rahmen (1) und die Klappe (2) bilden und dass von vorne und hinten Trenneinsätze (6) auf die beiden Werkzeugteile (4, 5) geschoben werden, welche die beiden Höhlräume voneinander trennen und einen Raum zum Einsetzen von Lagern (3) zwischen Rahmen (1) und Klappe (2) schaffen.

4. Spritzgusswerkzeug nach Anspruch 3,
**dadurch gekennzeichnet,**
**dass** das Spaltmaß zwischen Rahmen (1) und Klappe (2) individuell anpassbar ist.

5. Klappenmechanismus für einen Ansaugtrakt, insbesondere für ein Luftverteilungsrohr, einer Verbrennungsmaschine, mit einem Rahmen (1) und einer im Rahmen (1) drehbar gelagerten Klappe (2), wobei der Rahmen (1) Kuaral zu einer Schwenkachse (9) um welche die Klappe (2) i gebrauchsfertigen Zustand verschwinkbar ist, zwei Öffnungen (10) aufweist und
**dadurch gekennzeichnet,**
**dass** Rahmen (1) und Klappe (2) Spritzgussteile sind dadurch gekennzeichneit dass die Klappe (2) im Rahmen (1) dadurch unverlierbar gehalten ist, dass die Klappe (2) bezüglich der chwenkachse (9) axial über den Klappenkörper (13) vorstehende Abschnitte (14) aufweist, die in die Öffnungen (10) axial hineinragen und wobei die Klappe (2) eine zentrale Wellenaufnahme (11) zum
Einführen einer Welle aufweist.

6. Klappenmechanismus nach Anspruch 5,
**dadurch gekennzeichnet,**
**dass** die Klappe (2) in zwei Lagern (3) gelagert ist, die von außen zwischen Rahmen (1) und Klappe (2) eingesetzt sind.

## Claims

1. A method for the production of flap mechanisms for intake lines, in particular air distribution pipes, of combustion engines, wherein the flap mechanisms consist substantially of a frame and a flap (2) rotatably mounted within the frame (1),
wherein
the frame (1) and also the flap (2) are injection-moulded in an injection moulding tool in such a manner that after the injection moulding process, the flap (2) has a central shaft receptacle (11) and is captively secured within the frame (1), and that in a further operation, bearings (3) are inserted between frame (1) and flap (2), **characterized in that** subsequently a shaft is inserted into said shaft receptacle.

2. The method according to claim 1,
**characterized in**
**that** the frame (1) and the flap (2) are injection-moulded from the same material or from different materials, wherein this concerns in particular a plastic or plastics.

3. An injection moulding tool for carrying out the method according to claim 1 or claim 2,
**characterized in**
**that** two tool parts (4, 5) lying on top of each other form cavities for the frame (1) and the flap (2) and that from the front and from the back, separating inserts (6) are slid onto the two tool parts (4, 5), which separating inserts separate the two cavities from one another and provide a space for inserting bearings (3) between frame (1) and flap (2).

4. The injection moulding tool according to claim 3, **characterized in**
**that** the gap dimension between frame (1) and flap (2) is individually adjustable.

5. A flap mechanism for an intake line, in particular an air distribution pipe, of a combustion engine, comprising a frame (1) and a flap (2) rotatably mounted within the frame (1), wherein the frame (1) has two openings (10) that are coaxial with a swivel axis (9) about which the flap (2) can be swivelled in the state ready for use, and that the frame (1) and the flap (2) are injection-moulded parts, **characterized in that** the flap (2) is captively retained in the frame (1) **in that** the flap (2) has sections (14) which, with regard to the swivel axis (9), protrude axially beyond the flap body (13) and protrude axially into said openings (10), and wherein the flap (2) has a central shaft receptacle (11) for inserting a shaft.

6. The flap mechanism according to claim 5, **characterized in**
**that** the flap (2) is mounted in two bearings (3) which are inserted from outside between frame (1) and flap (2).

## Revendications

1. Procédé de fabrication de mécanismes à volet pour voies d'aspiration, notamment tuyaux de distribution d'air, de moteurs à combustion interne, dans lequel les mécanismes à volet sont constitués essentiellement d'un châssis et d'un volet (2) positionné rotativement à l'intérieur du châssis (1),
dans lequel
tant le châssis (1) que le volet (2) sont injectés dans un outil de moulage par injection de telle sorte qu'après le processus d'injection, le volet (2) présente un réceptacle d'arbre (11) central et est maintenu de manière imperdable dans le châssis (1), et en ce que dans une autre étape de travail des paliers (3) sont intégrés entre le châssis (1) et le volet (2), **caractérisé en ce qu'**un arbre est ensuite introduit dans le réceptacle d'arbre.

2. Procédé selon la revendication 1,
**caractérisé en ce que**
le châssis (1) et le volet (2) sont injectés dans le même matériau ou des matériaux différents, dans lequel il s'agit notamment d'un plastique ou de plastiques.

3. Outil de moulage par injection pour mettre en oeuvre le procédé selon les revendications 1 ou 2,
**caractérisé en ce que**
deux parties d'outil (4, 5) situées l'une au-dessus de l'autre forment des espaces creux pour le châssis (1) et le volet (2) et **en ce que** des inserts séparateurs (6) sont glissés à l'avant et à l'arrière sur les deux parties d'outil (4, 5), qui séparent les deux espaces creux l'un de l'autre et définissent un espace pour insérer des paliers (3) entre un châssis (1) et un volet (2).

4. Outil de moulage par injection selon la revendication 3,
**caractérisé en ce que**
le jeu d'écrêtement entre le châssis (1) et le volet (2) peut être adapté individuellement.

5. Mécanisme de volet pour une voie d'aspiration, notamment pour un tuyau de distribution d'air, d'un moteur à combustion interne, comportant un châssis (1) et un volet (2) positionné rotativement dans le châssis (1), dans lequel le châssis (1) présente deux ouvertures (10) coaxialement à un axe de basculement (9), autour duquel le volet (2) peut être basculé en l'état fini, le châssis (1) et le volet (2) sont des pièces moulées par injection et **caractérisé en ce que** le volet (2) est ainsi maintenu de manière imperdable dans le châssis (1) **en ce que** le volet (1) présente des portions (14) en saillie axiale au-dessus du corps de volet (13) par rapport à l'axe de basculement (9), qui saillent axialement à l'intérieur des ouvertures (10) et dans lequel le volet (2) présente un réceptacle d'arbre central (11) pour introduire un arbre.

6. Mécanisme de volet selon la revendication 5, **caractérisé en ce que**
le volet (2) est positionné dans deux paliers (3), qui sont insérés de l'extérieur entre le châssis (1) et le volet (2).
